# FASCICULE DE BREVET EUROPEEN

(11) **EP 2 032 822 B1**
(45) Date de publication et mention de la délivrance du brevet: **30.05.2018**
(21) Numéro de dépôt: 07803895.7
(22) Date de dépôt: 19.06.2007
(51) Int. Cl.: F02C 7/14, F02K 3/04

(54) **TURBOREACTEUR POUR AERONEF**
GASTURBINENTRIEBWERK FÜR EIN LUFTFAHRZEUG
TURBOREACTOR FOR AIRCRAFT

(30) Priorité: 27.06.2006 FR 0652653
(43) Date de publication de la demande: 11.03.2009
(73) Titulaire: AIRBUS OPERATIONS (S.A.S), 31060 Toulouse (FR)
(72) Inventeur: BULIN, Guillaume, F-31700 Blagnac (FR); OBERLE, Patrick, F-82600 Verdun Sur Garonne (FR)
(74) Mandataire: Gicquel, Olivier Yves Gérard
(86) Numéro de dépôt international: PCT/FR2007/051470
(87) Numéro de publication internationale: WO 2008/000994

(56) Documents cités:
- EP-A- 1 555 406
- EP-A2- 0 924 409
- GB-A- 2 234 805
- GB-A- 2 272 025
- US-A- 4 254 618
- US-A1- 5 269 135
- US-B1- 6 282 881

## Description

L'invention concerne un turboréacteur pour aéronef. Plus précisément l'invention concerne un échangeur thermique, également appelé échangeur surfacique, logé dans un turboréacteur. L'échangeur thermique selon l'invention est par exemple destiné à refroidir un fluide du système propulsif du turboréacteur, tel que de l'huile, afin qu'il puisse être réinjecté dans ledit système propulsif au moins partiellement refroidi. L'invention concerne également un aéronef comportant au moins un tel turboréacteur.

D'une manière générale, l'échangeur thermique selon l'invention trouve des applications dès lors qu'il est nécessaire de refroidir un fluide destiné à circuler dans ou à la périphérie d'un turboréacteur.

Dans le domaine de l'aviation civile, il est connu d'utiliser un échangeur thermique annexe pour refroidir l'huile qui circule dans le moteur du turboréacteur. L'huile chaude est amenée dans l'échangeur thermique pour y être refroidie avant d'être réutilisée dans le système propulsif.

EP1555406A, US5269135A1, US4254618A, US6282881B1
décrivent des arrangements classiques d'échangeurs destinés au refroidissement de fluide. GB2272025A décrit un arrangement d'échangeur au niveau d'une tuyère.

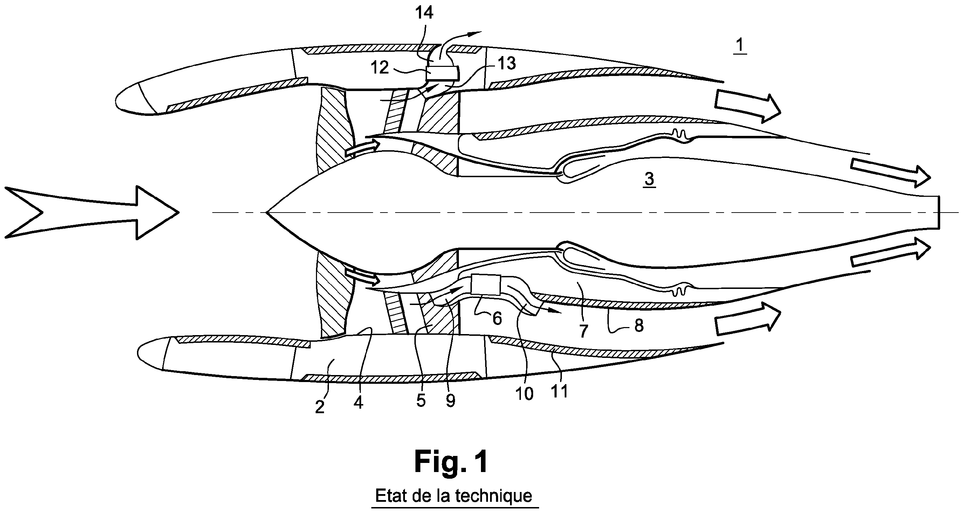

Sur la figure 1 de l'état de la technique est représenté, en coupe, un turboréacteur 1 ainsi que deux échangeur thermiques 2 et 12 de l'état de la technique.

Le turboréacteur 1 comporte une nacelle 2 dans laquelle est logé un moteur 3. Le moteur 3 est fixé à une paroi interne 4 de la nacelle 2 par l'intermédiaire de bifurcations d'air 5.

Dans l'état de la technique, il existe de manière générale deux positionnement possibles pour l'échangeur thermique. En effet, l'échangeur thermique peut être positionné au niveau du corps du moteur 3, ou au niveau de la nacelle 2.

Lorsque l'échangeur thermique est 6 monté au niveau du corps du moteur 3, il est plus précisément logé dans un volume interne 7 ménagé entre un capot moteur 8 entourant au moins partiellement le moteur 3, et le moteur 3 lui-même. Une entrée d'air 9 prélève de l'air froid dans le flux d'air froid traversant le turboréacteur 1, pour l'amener à l'intérieur de l'échangeur thermique 6. L'air froid traverse la matrice de l'échangeur thermique, dans lequel circule l'huile chaude à refroidir. Les deux fluides sont séparés l'un de l'autre par des cloisons, et ne se mélangent pas. L'échange calorifique se fait à l'intérieur de la matrice. L'air partiellement réchauffé sort de l'échangeur thermique 6, par une sortie d'air 10, pour être réinjecté dans le flux d'air secondaire sortant de la nacelle.

Dans le cas où l'échangeur thermique 12 est positionné au niveau de la nacelle 2, il est plus précisément logé dans le volume interne de ladite nacelle 2. Une entrée d'air 13 prélève de l'air froid dans le flux d'air froid traversant le turboréacteur 1, pour l'amener à l'intérieur dudit échangeur thermique 12. Après avoir traversé la matrice de l'échangeur thermique 12, ce débit d'air est soit éjecté à l'extérieur de la nacelle 2 par une sortie d'air 14, soit réintroduit dans l'écoulement interne du moteur par une sortie d'air spécifique (non représentée).

De tels échangeurs thermiques ne se révèlent pas être une solution optimale en terme de rendement propulsif et d'impact aérodynamique sur le moteur, et ce pour plusieurs raisons. Dans le cas où l'air qui traverse la matrice de l'échangeur est rejeté à l'extérieur de l'écoulement interne du moteur, c'est-à-dire dans le cas d'un montage dans la nacelle avec sortie d'air vers l'extérieur, le prélèvement d'air constitue une perte directe de rendement propulsif dans la mesure où il ne contribue pas ou peu à la poussée du moteur. Dans le cas où l'air qui traverse la matrice de l'échangeur thermique est ré-introduit dans l'écoulement interne du moteur, cas d'un montage dans le corps du moteur, la matrice de l'échangeur thermique induit de par son architecture interne une forte perte de charge dans l'écoulement et tend à perturber de façon plus ou moins significative l'écoulement aérodynamique aval du moteur. Par ailleurs, la présence d'une entrée d'air, d'un ou plusieurs conduits internes, ainsi que d'une sortie d'air engendre des pertes de charge et perturbe de façon plus ou moins significative l'écoulement interne du moteur.

Une autre solution connue est d'utiliser un échangeur à plaques. On connaît notamment un échangeur à plaques épousant localement la forme de la paroi interne 4 de la nacelle 2 à laquelle elle est accolée. Une face supérieure de l'échangeur thermique est accolée à la paroi interne 4 de la nacelle, tandis qu'une face inférieure est située dans le flux d'air froid qui traverse le volume interne de la nacelle 2. La chaleur transportée au sein de l'échangeur est transférée par conduction thermique à la surface interne de la plaque formant la face inférieure dudit échangeur thermique. Cette plaque chaude est léchée par le flux d'air froid s'écoulant dans la nacelle 2. La chaleur emmagasinée dans la plaque chaude est ainsi dissipée par convection forcée vers l'écoulement aérodynamique du turboréacteur 1.

Un inconvénient de ce deuxième mode de réalisation d'un échangeur thermique de l'état de la technique est qu'il est incompatible avec les systèmes actuels de réduction des nuisances sonores sortant du turboréacteur. En effet, pour réduire ces nuisances sonores, il est connu de recouvrir au moins partiellement la paroi interne 4 de la nacelle 2 d'un revêtement acoustique 11. Plus généralement, ce revêtement acoustique 11 recouvre les parois internes et externes de la nacelle 2 et du capot moteur 8 dès lors que deux de ces parois sont en regard l'une de l'autre. La présence de ce revêtement acoustique 11 est incompatible avec l'accolement de l'échangeur thermique à plaques sur la paroi interne 4 de la nacelle 2. Il serait nécessaire, pour utiliser un tel échangeur thermique à plaques, de supprimer localement le revêtement acoustique 11, ce qui s'avère difficile au vu des critères de dimensionnement relatifs aux nuisances sonores.

Dans l'invention, on cherche à fournir une alternative à l'emplacement actuel des échangeurs thermiques destinés à refroidir un fluide traversant ledit échangeur thermique par contact avec un écoulement gazeux tangentiel.

Pour cela, l'invention propose de disposer l'échangeur thermique non plus au niveau d'une paroi froide de la nacelle, au niveau de laquelle il peut exister un revêtement acoustique, mais au niveau d'une paroi du moteur ou de la nacelle dépourvue d'un tel revêtement acoustique. Etant donné la configuration actuelle des turboréacteurs, seule la portion de paroi externe du moteur qui est située en aval de la nacelle, c'est-à-dire au niveau de la tuyère dudit moteur, est susceptible de recevoir l'échangeur thermique selon l'invention. Cette portion de paroi externe étant située au niveau de la bouche d'éjection du flux d'air primaire sortant du moteur, elle est susceptible de subir des élévations de température très importantes. De ce fait, le risque est que l'échange thermique ne se fasse pas depuis le fluide chaud traversant l'échangeur thermique vers l'air froid léchant ledit échangeur thermique, mais depuis la paroi chaude du moteur vers le liquide moins chaud traversant l'échangeur thermique.

Dans l'invention, pour éviter cet échange calorifique indésirable, tout en maintenant la position avantageuse de l'échangeur thermique au niveau de la tuyère du moteur, on propose d'isoler thermiquement l'échangeur thermique de la paroi chaude sur laquelle il est installé. Pour cela, on ménage une couche d'air isolante thermiquement entre la paroi externe chaude du moteur et la paroi inférieure de l'échangeur thermique, de manière à limiter les échanges de chaleur indésirables entre ces deux parois. Par paroi inférieure, on entend la paroi de l'échangeur dirigée vers le moteur, par opposition à la paroi supérieure, dirigée vers la paroi interne de la nacelle. Cette couche isolante permet d'éviter un contact direct entre la paroi chaude du moteur et la paroi inférieure de l'échangeur thermique, en créant une résistance thermique élevée entre les deux parois. Avantageusement, l'entrée et la sortie d'air ménagées au niveau de la couche d'air isolante sont telles que le débit d'air est suffisant pour éviter une stagnation trop longue de l'air dans l'espace ménagé entre les deux parois. En effet, si le débit d'air est nul ou insuffisant, la couche d'air isolante qui y stagne risque d'être chauffée par la paroi chaude du moteur, et donc de ne plus pouvoir jouer son rôle d'isolant thermique. On peut également prévoir une poche d'air, c'est-à-dire de l'air stagnant dans l'espace ménagé entre les deux parois, cette poche d'air étant renouvelée régulièrement, par exemple par ouverture d'une vanne de sortie de l'air chaud et ouverture d'une vanne permettant l'entrée d'air froid. Bien entendu, l'échangeur thermique selon l'invention peut également être disposé en amont de la tuyère, ou même sur la paroi interne de la nacelle. La couche d'air isolante aura alors une fonction moindre, mais ne sera pas préjudiciable au fonctionnement de l'échangeur.

L'invention a donc pour objet un turboréacteur pour aéronef comportant une nacelle entourant un moteur et un échangeur thermique destiné à refroidir un fluide participant au système propulsif du moteur, le moteur comprenant une extrémité arrière non recouverte par la nacelle, ladite extrémité ayant une paroi externe, caractérisé en ce que l'échangeur thermique est fixé à ladite paroi externe, un espace interstitiel dans lequel de l'air peut circuler étant ménagé entre la paroi externe du moteur et une paroi inférieure de l'échangeur thermique, la paroi inférieure de l'échangeur thermique étant définie comme la paroi de l'échangeur dirigée vers le moteur, de sorte à isoler thermiquement la paroi inférieure de l'échangeur de la paroi externe du moteur. Par espace interstitiel, on entend un espace de volume réduit, de manière à minimiser la distance entre l'échangeur thermique et la paroi chaude du moteur, afin notamment de ne pas créer de protubérance excessive au niveau de la surface externe de la paroi du moteur, qui pourrait engendrer des perturbations aérodynamiques. Le contour externe de l'espace interstitiel selon l'invention suit un contour externe de l'échangeur thermique qu'il isole.

L'échangeur thermique peut être un échangeur surfacique, tel qu'un échangeur à plaques, muni d'une ou plusieurs plaques dans lesquelles le fluide à refroidir circule, l'air de refroidissement circulant entre les plaques. Il est également possible que l'échangeur thermique comporte un boîtier traversé par une tuyauterie dans laquelle le fluide à refroidir circule, l'air de refroidissement circulant autour de la tuyauterie.

Préférentiellement, l'échangeur thermique selon l'invention est disposé au niveau de l'extrémité arrière du moteur, là où il n'existe aucun revêtement acoustique susceptible de revêtir la paroi externe dudit moteur.

Selon des exemples de réalisation du turboréacteur selon l'invention, il est possible de prévoir tout ou partie des caractéristiques supplémentaires suivantes :
- Le turboréacteur comporte des moyens de fixation de l'échangeur thermique à la paroi externe du moteur ;
- les moyens de fixation comportent au moins une entretoise. La ou les entretoises peuvent être verticales ou horizontales ;
- l'espace interstitiel forme une poche d'air, dans laquelle l'air est partiellement stagnant. Par partiellement stagnant, on entend que le temps de séjour dans la nacelle de l'air de refroidissement transitant par la poche d'air est supérieur au temps de séjour dans la nacelle de l'air froid traversant le volume interne général de la nacelle.
- la paroi externe du moteur comporte un évidement dans lequel l'échangeur thermique est logé, de manière à s'étendre dans le prolongement du moteur. On supprime ainsi toute protubérance à la surface de la paroi externe du moteur, susceptible d'engendrer des perturbations aérodynamiques.
- l'échangeur thermique est muni d'une entrée d'air, disposée en amont du corps de l'échangeur thermique, apte à amener de l'air dans l'espace interstitiel ;
- l'entrée d'air prélève de l'air dans le flux d'air secondaire traversant la nacelle. Autrement, il est possible de prélever l'air dans le volume d'air de ventilation ménagé entre le corps du moteur et le capot moteur.
- l'échangeur thermique comporte une sortie d'air ménagée en aval du corps de l'échangeur thermique, apte à permettre l'écoulement de l'air circulant dans l'espace interstitiel hors dudit espace interstitiel, préférentiellement dans le flux secondaire traversant la nacelle. Il est également possible de prévoir de réinjecter le flux d'air dans le volume d'air de ventilation.

L'entrée et la sortie d'air alimentant l'espace interstitiel peuvent être formées d'une simple fente ou orifice. Il est également possible de munir lesdites entrée et sortie d'air de moyens d'obturation spécifiques, de manière à réguler à volonté l'entrée et la sortie d'air dans ledit espace interstitiel.
- l'échangeur thermique est ménagé sur tout un périmètre circulaire externe du moteur. Il est également possible d'avoir un échangeur thermique surfacique ponctuel, c'est-à-dire ne recouvrant qu'une partie limitée de la surface externe de la paroi chaude du moteur.

L'invention sera mieux comprise à la lecture de la description qui suit et à l'examen des figures qui l'accompagnent. Celles-ci sont présentées à titre indicatif et nullement limitatif de l'invention.

Les figures représentent :
- Figure 1 : une coupe transversale d'un turboréacteur muni d'un échangeur thermique de l'état de la technique déjà décrit ;
- Figure 2 : une représentation schématique éclatée d'un turboréacteur comportant un échangeur thermique selon un exemple de réalisation de l'invention ;
- Figures 3A et 3B : deux représentations schématiques, en coupe transversale, du positionnement de l'échangeur thermique selon l'invention sur la paroi externe du moteur ;
- Figures 4A et 4B : deux agrandissements de la paroi externe d'un moteur muni de deux exemples de réalisation d'échangeurs thermiques selon l'invention.

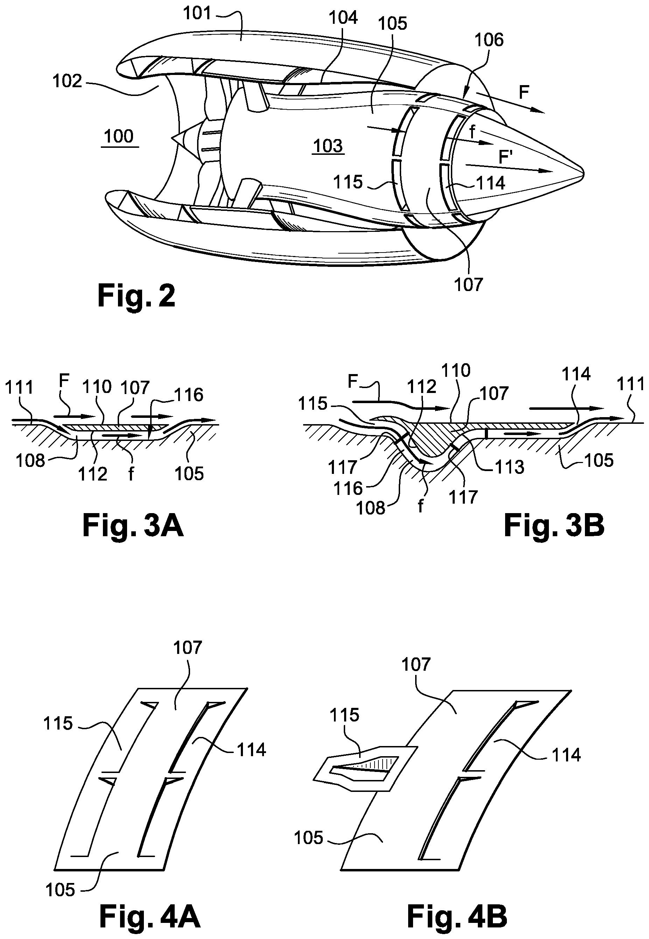

Sur la figure 2 est représenté un turboréacteur 100 muni d'un échangeur thermique 107 selon l'invention.

Le turboréacteur 100 comporte une nacelle 101 dont un volume interne 102 reçoit un moteur 103. Comme cela a été exposé dans la description de la figure 1 de l'état de la technique, la paroi interne 104 de la nacelle 101 est le plus souvent recouverte d'un traitement acoustique (non représenté), de même qu'une partie avant de la paroi externe 105 du moteur 103, en regard de la paroi interne 104 de la nacelle 101. A l'inverse, l'extrémité arrière 106 du moteur 103, non recouverte par la nacelle 101, est toujours dépourvue d'un tel revêtement acoustique. Selon l'invention, on dispose avantageusement l'échangeur thermique 107 au niveau de l'extrémité arrière 106 du moteur 103. Par avant et arrière, on entend par rapport au sens d'écoulement du flux d'air secondaire F traversant la nacelle.

Sur les figures 3A et 3B sont représentées deux sections de la paroi externe 105 du moteur 103 au niveau de l'extrémité arrière 106 munie de l'échangeur thermique 107.

La paroi externe 105 du moteur 103 est creusée de manière à ménager un évidement 108 recevant l'échangeur thermique 107. Ainsi, la paroi supérieure 110 de l'échangeur thermique, dirigée vers la paroi interne 104 de la nacelle 102 est affleurante à la surface externe 111 de la paroi externe 105 du moteur 103. Le flux d'air secondaire traversant le volume interne 102 de la nacelle 101 ne subit pas de perturbations aérodynamiques du fait de la présence de l'échangeur thermique 107.

L'espace interstitiel 116 selon l'invention est ménagé dans l'évidement 108, et est délimité par la paroi inférieure 112 de l'échangeur thermique 107 et la surface externe 111 de la paroi externe 105 du moteur 103.

Dans l'exemple représenté à la figure 3A, l'échangeur thermique 107 est formé par exemple d'un boîtier dans lequel circule le fluide à refroidir, tel que de l'huile provenant du système propulsif du moteur 103.

A la figure 3B est représentée une autre forme d'échangeur thermique 107. Le contour de l'évidement 108 ménagé entre la surface externe 111 de la paroi externe 105 du moteur 103 et la paroi inférieure 112 de l'échangeur thermique 107 suit sensiblement le contour externe dudit échangeur thermique 107. Avantageusement, un goulot d'étranglement 113 est formé dans l'espace interstitiel 116 correspondant, de manière à réduire le débit d'air au niveau d'une sortie d'air 114 ménagée en aval de l'échangeur thermique 107. Par amont et aval, on entend par rapport au sens d'écoulement du flux d'air secondaire F dans le volume interne 102 de la nacelle 101. On forme ainsi une poche d'air dans laquelle l'air formant la couche d'air isolant est partiellement stagnant.

Dans tous les cas, l'espace interstitiel 116 est apte à être traversé par un flux d'air isolant f provenant par exemple du flux d'air secondaire F circulant dans la nacelle 101.

L'entrée d'air 115 disposée en amont de l'échangeur thermique 107 est orientée dans le sens d'écoulement du flux d'air secondaire F de manière à faciliter l'entrée d'air dans l'espace interstitiel 116.

Avantageusement, la sortie d'air 114 est une ouverture aérodynamique, de manière à limiter la traînée, et faciliter la sortie d'air isolant f.

L'échangeur thermique 107 est, par exemple, fixé à la surface externe 111 de la paroi externe 105 du moteur 103 par des entretoises dont les dimensions sont proportionnelles aux dimensions que l'on souhaite donner audit espace interstitiel 116.

Dans un autre exemple de réalisation, et comme cela est représenté sur la figure 2, l'échangeur thermique 107 est directement ménagé sur la paroi externe 105 du moteur 103. En effet, la paroi externe est creusée de manière à ménager une fente traversante entre une première et une deuxième couches de la paroi externe 105, les deux couches restant localement solidaires l'une de l'autre. Par fente traversante, on entend qu'elle débouche en deux points amont et aval. L'échangeur thermique 107 est ménagé dans l'épaisseur de la première couche, ou couche supérieure.

On garantit ainsi qu'il n'existe aucune dénivellation sur la surface externe 111 de la paroi externe 105 du moteur 103, susceptible de créer des perturbations aérodynamiques.

Dans l'exemple représenté à la figure 2, l'échangeur thermique 107 est ménagé sur tout un périmètre externe du moteur 103. Bien entendu, il est également possible de ménager l'échangeur thermique 107 sur un périmètre externe partiel dudit moteur 103.

A la figure 3B sont représentées des entretoises verticales 117 reliant la paroi inférieure 112 de l'échangeur à la surface externe 111 de la paroi externe 105 du moteur 103. Par verticale, on entend que les entretoises s'étendent radialement depuis la paroi du moteur jusqu'à l'échangeur thermique 107.

Sur les figure 4A et 4B, on peut voir un agrandissement de la paroi externe 105 du moteur 103, au niveau d'un échangeur thermique 107 selon l'invention. L'entrée d'air 115 sur la figure 4A est symétrique à la sortie d'air 114. Plus précisément, l'entrée d'air 115 comme la sortie d'air 114 sont formées d'une fente longitudinale, s'étendant sur toute la largeur de l'échangeur thermique 107. Par largeur, on entend la dimension s'étendant verticalement par rapport à l'axe longitudinal du turboréacteur.

Sur la figure 4B, à l'inverse, l'entrée d'air 115 est ponctuelle, c'est-à-dire ménagée sur une largeur partielle de l'échangeur thermique 107. Ainsi, le débit du flux d'air isolant f pénétrant dans l'espace interstitiel 116 est moins important dans l'exemple représenté à la figure 4B que dans l'exemple représenté à la figure 4A.

Dans tous les cas, le flux d'air isolant f transitant par l'espace interstitiel 116 est apte à maintenir une isolation thermique entre la paroi chaude 105 du moteur 103 et la paroi inférieure 112 de l'échangeur thermique 107 de manière à minimiser l'échange de chaleur entre ces deux parois.

Le flux d'air isolant f sortant par la sortie d'air 114, telle que représentée à la figure 2, se mélange au flux d'air secondaire F sortant du volume interne de la nacelle et au flux d'air primaire F' sortant de la tuyère. La quantité d'air prélevée au niveau du flux d'air secondaire F pour alimenter l'espace interstitiel étant relativement faible, on ne perturbe pas l'écoulement aérodynamique à l'intérieur du volume interne 103 de la nacelle 101. Par ailleurs, dans le cas où le flux d'air est prélevé dans le volume de ventilation ménagé entre le capot et le corps du moteur, il n'existe aucune perturbation aérodynamique au sein de la nacelle 101.

## Revendications

1. Turboréacteur (100) pour aéronef comportant une nacelle (101) entourant un moteur (103) et un échangeur thermique (107) destiné à refroidir un fluide participant au système propulsif du moteur, le moteur comprenant une extrémité arrière (106) non recouverte par la nacelle, ladite extrémité ayant une paroi externe, **caractérisé en ce que** l'échangeur thermique est fixé à ladite paroi externe (105), un espace interstitiel (116) dans lequel de l'air peut circuler étant ménagé entre la paroi externe du moteur et une paroi inférieure (112) de l'échangeur thermique, la paroi inférieure de l'échangeur thermique étant définie comme la paroi de l'échangeur dirigée vers le moteur, de sorte à isoler thermiquement la paroi inférieure de l'échangeur de la paroi externe du moteur.

2. Turboréacteur selon la revendication 1, **caractérisé en ce qu'**il comporte des moyens de fixation de l'échangeur thermique à la paroi externe du moteur.

3. Turboréacteur selon la revendication 2, **caractérisé en ce que** les moyens de fixation comportent au moins une entretoise (117).

4. Turboréacteur selon l'une des revendications 1 à 3, **caractérisé en ce que** l'espace interstitiel forme une poche d'air.

5. Turboréacteur selon l'une des revendications 1 à 4, **caractérisé en ce que** la paroi externe du moteur comporte un évidement (108) dans lequel l'échangeur thermique est logé de manière à s'étendre dans le prolongement du moteur.

6. Turboréacteur selon l'une des revendications 1 à 5, **caractérisé en ce que** l'échangeur thermique est muni d'une entrée d'air (115), disposée en amont du corps de l'échangeur thermique, apte à amener de l'air dans l'espace interstitiel.

7. Turboréacteur selon la revendication 6, **caractérisé en ce que** l'entrée d'air prélève de l'air dans le flux d'air secondaire (F) traversant la nacelle.

8. Turboréacteur selon l'une des revendications 1 à 7, **caractérisé en ce que** l'échangeur thermique comporte une sortie d'air (114) ménagée en aval du corps de l'échangeur thermique, apte à permettre l'écoulement de l'air circulant dans l'espace interstitiel hors dudit espace interstitiel.

9. Turboréacteur selon l'une des revendications 1 à 8, **caractérisé en ce que** l'échangeur thermique est ménagé sur tout un périmètre circulaire externe du moteur.

10. Aéronefcomportant au moins un turboréacteur selon l'une des revendications 1 à 9.

## Patentansprüche

1. Turboluftstrahltriebwerk (100) für ein Luftfahrzeug, welches eine Gondel (101), die einen Motor (103) umgibt, und einen Wärmetauscher (107) der dazu bestimmt ist, ein am Antriebssystem des Motors beteiligtes Fluid zu kühlen, aufweist, wobei der Motor ein hinteres Ende (106) umfasst, das nicht von der Gondel bedeckt ist, wobei dieses Ende eine Außenwand aufweist, **dadurch gekennzeichnet, dass** der Wärmetauscher an dieser Außenwand (105) befestigt ist, wobei ein Zwischenraum (116), in welchem Luft zirkulieren kann, zwischen der Außenwand des Motors und einer unteren Wand (112) des Wärmetauschers, wobei die untere Wand des Wärmetauschers als die dem Motor zugewandte Wand des Wärmetauschers definiert ist, so ausgebildet ist, dass er die untere Wand des Wärmetauschers von der Außenwand des Motors thermisch isoliert.

2. Turboluftstrahltriebwerk nach Anspruch 1, **dadurch gekennzeichnet, dass** es Mittel zur Befestigung des Wärmetauschers an der Außenwand des Motors aufweist.

3. Turboluftstrahltriebwerk nach Anspruch 2, **dadurch gekennzeichnet, dass** die Mittel zur Befestigung wenigstens eine Querstrebe (117) aufweisen.

4. Turboluftstrahltriebwerk nach einem der Ansprüche 1 bis 3, **dadurch gekennzeichnet, dass** der Zwischenraum eine Lufttasche bildet.

5. Turboluftstrahltriebwerk nach einem der Ansprüche 1 bis 4, **dadurch gekennzeichnet, dass** die Außenwand des Motors eine Vertiefung (108) aufweist, in welcher der Wärmetauscher aufgenommen ist, derart, dass er sich in der Verlängerung des Motors erstreckt.

6. Turboluftstrahltriebwerk nach einem der Ansprüche 1 bis 5, **dadurch gekennzeichnet, dass** der Wärmetauscher mit einem Lufteinlass (115) ausgestattet ist, der stromaufwärts des Körpers des Wärmetauschers angeordnet ist und geeignet ist, Luft in den Zwischenraum einzuführen.

7. Turboluftstrahltriebwerk nach Anspruch 6, **dadurch gekennzeichnet, dass** der Lufteinlass Luft aus dem sekundären Luftstrom (F) entnimmt, der die Gondel durchquert.

8. Turboluftstrahltriebwerk nach einem der Ansprüche 1 bis 7, **dadurch gekennzeichnet, dass** der Wärmetauscher einen stromabwärts des Körpers des Wärmetauschers ausgebildeten Luftauslass (114) aufweist, der geeignet ist, das Ausströmen der in dem Zwischenraum zirkulierenden Luft aus dem Zwischenraum zu ermöglichen.

9. Turboluftstrahltriebwerk nach einem der Ansprüche 1 bis 8, **dadurch gekennzeichnet, dass** der Wärmetauscher auf einem gesamten kreisförmigen Außenumfang des Motors ausgebildet ist.

10. Luftfahrzeug, welches wenigstens ein Turboluftstrahltriebwerk nach einem der Ansprüche 1 bis 9 aufweist.

## Claims

1. Aircraft turbojet (100) including a nacelle (101) encircling an engine (103) and a heat exchanger (107) that is intended to cool a fluid participating in the propulsion system of the engine, the engine comprising a rear end (106) that is not covered by the nacelle, said end having an external wall, **characterized in that** the heat exchanger is fastened to said external wall (105), an interstitial space (116) through which air may flow being provided between the external wall of the engine and a lower wall (112) of the heat exchanger, the lower wall of the heat exchanger being defined as that wall of the exchanger which is directed toward the engine, so as to thermally isolate the lower wall of the exchanger from the external wall of the engine.

2. Turbojet according to Claim 1, **characterized in that** it includes means for fastening the heat exchanger to the external wall of the engine.

3. Turbojet according to Claim 2, **characterized in that** the fastening means include at least one spacer (117).

4. Turbojet according to one of Claims 1 to 3, **characterized in that** the interstitial space forms an air pocket.

5. Turbojet according to one of Claims 1 to 4, **characterized in that** the external wall of the engine includes a void (108) in which the heat exchanger is housed so as to lie in the extension of the engine.

6. Turbojet according to one of Claims 1 to 5, **characterized in that** the heat exchanger is equipped with an air inlet (115) that is placed upstream of the body of the heat exchanger and that is suitable for admitting air into the interstitial space.

7. Turbojet according to Claim 6, **characterized in that** the air inlet draws air from the bypass airflow (F) passing through the nacelle.

8. Turbojet according to one of Claims 1 to 7, **characterized in that** the heat exchanger includes an air outlet (114) that is located downstream of the body of the heat exchanger, and that is able to allow the air flowing through the interstitial space to flow out of said interstitial space.

9. Turbojet according to one of Claims 1 to 8, **characterized in that** the heat exchanger is located on all an external circular perimeter of the engine.

10. Aircraft including at least one turbojet according to one of Claims 1 to 9.
